# EUROPÄISCHE PATENTSCHRIFT

(11) **EP 1 302 138 B1**
(45) Veröffentlichungstag und Bekanntmachung des Hinweises auf die Patenterteilung: **20.12.2006**
(21) Anmeldenummer: 02405860.4
(22) Anmeldetag: 07.10.2002
(51) Int. Cl.: A47J 31/44

(54) **Kaffee-Brühvorrichtung**
Coffee brewer
Dispositif d'infusion de café

(30) Priorität: 15.10.2001 CH 18922001
(43) Veröffentlichungstag der Anmeldung: 16.04.2003
(73) Patentinhaber: JURA ELEKTROAPPARATE AG, CH-4626 Niederbuchsiten (CH)
(72) Erfinder: Reyhanloo, Shahryar, 4573 Lohn Ammannsegg (CH)
(74) Vertreter: EGLI-EUROPEAN PATENT ATTORNEYS

(56) Entgegenhaltungen:
- EP-A- 0 586 330
- EP-A- 0 748 105
- WO-A-00/48467
- US-A- 6 095 031

## Beschreibung

Die Erfindung betrifft ein Kaffeebrühsystem, das mehrere Kaffee-Brühvorrichtungen und eine zentrale Informationsstelle zur Kommunikation mit den Kaffee-Brühvorrichtungen umfasst.

Kaffee-Brühvorrichtungen, insbesondere automatische Kaffee-Brühvorrichtungen, sind an sich seit langem bekannt. Bei derartigen Kaffee-Brühvorrichtungen kann ein Benutzer üblicherweise über am Gehäuse der Vorrichtung angeordnete Tasten oder sonstigen Bedienungselementen einen Kaffeetyp, wie beispielsweise einen sogenannten kurzen Espresso, langen Espresso, normaler Kaffee, etc. wählen und sich anschliessend brühen lassen. Es sind auch schon automatische Kaffee-Brühvorrichtungen bekannt geworden, bei denen der Benutzer zunächst vorgegebene Parameter des Brühvorganges durch die Tasten beeinflussen und in derart geänderter Weise in einer Steuereinrichtung der Kaffee-Brühvorrichtung dauerhaft speichern kann.

Es sind auch schon Kaffee-Brühvorrichtungen bekannt geworden, die über eine serielle Schnittstelle mit einem unmittelbar neben der entsprechenden Kaffee-Brühvorrichtung angeordneten Diagnosegerät verbindbar sind. Das Diagnosegerät kann dann in der Kaffee-Brühvorrichtung über den Zustand des Gerätes gespeicherte Informationen auslesen. Hierzu muss allerdings die Kaffee-Brühvorrichtung zu einem Händler oder zum Hersteller der Kaffee-Brühvorrichtung gebracht werden, der über ein solches Diagnosegerät verfügt.

Die EP-0 586 330 zeigt eine Maschine zum Bezug von Getränken und eine Anordnung von mehreren Maschinen zu einem Getränkebezugsdispositiv. Die Maschinen verfügen über eine Schnittstelle zum Einsetzen einer Chipkarte als transportables elektronisches Speichermittel. Die Chipkarten dienen zur bidirektionalen Datenkommunikation mit einem Chipkarten-Verarbeitungsgerät. Die Chipkarten können Daten zum Steuern und/oder Parametrisieren der Getränkebereitungsmaschinen enthalten. Die Chipkarten dienen als Schlüssel für Getränkebezüge und als Hilfsmittel zur Getränkebezugsabrechnung. Das Chipkarten-Verarbeitungsgerät ist ein Spezialgerät mit dem diese Vorgänge zentral verwaltet werden. Die Chipkarten können entweder direkt in die entsprechenden Schnittstellen der Getränkebereitungsmaschinen oder in die entsprechende Schnittstelle des Chipkarten-Verwaltungsgerätes eingesetzt werden. Die Lösung ermöglicht zwar einfachen lokalen Datenaustausch, sie ist aber für den universellen und weiträumigen Einsatz ungeeignet. Zudem erfordert sie nach wie vor ein lokales Spezialgerät in der Form eines Chipkarten-Verarbeitungsgerätes.

Der Erfindung liegt deshalb die Aufgabe zugrunde, den Datenaustausch mit der Kaffee-Brühvorrichtung weiter zu vereinfachen, insbesondere für solche Daten, die bisher vom Benutzer manuell in die Kaffee-Brühvorrichtung eingegeben werden mussten.

Die Aufgabe wird durch ein Kaffeebrühsystem nach dem unabhängigen Anspruch 1 gelöst.

Die Auslegung der Schnittstelle und des transportablen elektronischen Speichermittels zur Verwendung mit einer an einen gängigen Personal Computer (PC) anschliessbaren Einsteckeinrichtung (Docking-Station) ergibt den Vorteil, dass handelsübliche Geräte und vielerorts ohnehin bereits vorhandene Einrichtungen (PCs) verwendet werden können.

Im Gegensatz zu vorbekannten Kaffeemaschinen eröffnet dies dem Benutzer der Maschine nun erstmals die Möglichkeit, ohne grossen technischen Aufwand seine Kaffeemaschine auch nach deren Installation mit neuesten Informationen und Funktionalitäten zu speisen. Dies war bis anhin nicht vorgesehen. Wenn bisher überhaupt ein solcher Datenaustausch hätten stattfinden können, so hätte hierzu die Kaffeemaschine transportiert werden, oder ein Servicetechniker hätte zum Standort der Maschine anreisen müssen, um Modifikationen vorzunehmen. Obwohl nichts von dem erforderlich ist, kann die Kaffeemaschine aufgrund des der Erfindung zugrundeliegenden Gedankens mit beispielsweise neuesten Erkenntnissen über Brühparameter, wie bestimmte (Unter-)Kombinationen der Parameter Wassermenge, Wassertemperatur, Wasserdruck Pulvermenge und Mahlgrad des Pulvers, gespeist werden. Diese Parameter sind neben der verwendeten Kaffeesorte hauptverantwortlich für das Aroma des Kaffees. Gemäss der Erfindung kann somit vorgesehen sein, dass der Benutzer die Kaffeemaschine jederzeit selbständig und ohne die Inanspruchnahme einer Serviceperson über das Internet von einer Versandstelle mit neuesten, vom Hersteller der Maschine bereitgestellten Aromen versorgen kann. Der Benutzer kann somit auf besonders einfache Weise in seine Kaffeemaschine die Parameter für individuelle Aromen eingeben und dort speichern.

Ein besonders grosser Nutzen kann aus dem der Erfindung zugrunde liegenden Gedanken gezogen werden, wenn zwischen dem Benutzer bzw. dessen Kaffeemaschine und einer zentralen Stelle, wie beispielsweise einem Server des Herstellers der Kaffeemaschine, Diagnoseinformationen über die Kaffeemaschine ausgetauscht werden können. So kann eine zentrale Stelle, die für Reparaturen verantwortlich ist, mit Maschinendaten eines defekten Gerätes versorgt werden. Anhand der während des Betriebes zuvor ständig aufgezeichneten Maschinendaten kann dann erkannt werden, ob beispielsweise tatsächlich ein Defekt vorliegt oder ob es sich um einen Bedienungsfehler handelt. Der Kunde kann dann, ebenfalls über Fernkommunikation, mit entsprechenden Informationen versorgt werden.

Ferner eröffnet dies die Möglichkeit, die gesamte Logistik im Bereich der Wartung von Kaffeemaschinen grundlegend zu verändern. Auf Basis der Diagnosedaten kann nämlich sofort alles, was für die Reparatur der Maschine erforderlich ist, zielgenau in die Wege geleitet werden. Da bekannt ist, welcher Defekt vorliegt, können sofort die entsprechenden Ersatzteile versandt und ein Servicetechniker mit entsprechenden Anweisungen zum Standort der Maschine geschickt werden. Alternativ könnte auch dem Kunden die Adresse der nächstgelegenen Reparaturstelle und dieser der Defekt samt konkretem Reparaturauftrag mitgeteilt werden. Die von dem Zeitpunkt, zu dem der Defekt bemerkt wird, bis zur Beseitigung des Defektes benötigte Zeit kann hierdurch erheblich reduziert werden.

Es ist damit nicht nur möglich, die Kosten für den bisher üblichen Transport der Maschine einzusparen. Es ist zudem möglich, auch einen erheblichen Teil der bisher bei einer Vielzahl von Händlern im Zusammenhang mit der Diagnose der Maschinen entstandenen Kosten zu vermeiden. Ist eine Kaffeemaschine defekt, so können Maschinendaten der Kaffeemaschine über Datenleitungen und vom Benutzer der Kaffeemaschine selbst zu nur noch einer zentralen Diagnosestelle, beispielsweise dem Hersteller oder eine regionale Reparaturstelle, gesandt und ausgewertet werden.

In einer bevorzugten Ausführungsform kann bezüglich der Möglichkeit einer Datenkommunikation ein modularer Aufbau vorgesehen sein. Darunter ist zu verstehen, dass die Kaffeemaschine in einer Grundkonfiguration lediglich eine Schnittstelle für den Datenaustausch aufweist. Die erforderlichen Kommunikationsmittel, wie Modem und Datenleitungen oder aber auch entsprechende Speichermittel und Software für den Datenaustausch sind von der Maschine getrennt und nachrüstbar. Da in vielen Haushalten und nahezu sämtlichen Büros ein Internetanschluss über einen Personal Computer vorhanden ist, kann dieser auch für den erfindungsgemässen Datenaustausch genutzt werden. Hierbei kann beispielsweise vorgesehen sein, auf den Personal Computer ein Programm zu installieren, das über ein Modem, Telefon- oder sonstige Datenleitungen (Telekommunikationsmittel) Datenkommunikation in beide Richtungen zwischen Kaffeemaschine und einem dem Hersteller zuzuordnenden zentralen und weit entfernten Computer zulässt. Selbstverständlich kann der Datenfluss auch leitungslos erfolgen, beispielsweise über mobile Telefone, Funk und/oder durch Infrarotstrahlung. Dies gilt insbesondere für die Strecke zwischen Personal Computer und Kaffeemaschine.

In einer besonders günstigen Ausführungsform kann hierzu ein transportables Speichermodul vorgesehen sein, mit dem sowohl am Personal Computer als auch an der Kaffeemaschine Daten ein- und auslesbar sind. Das Speichermodul sollte hierzu eine Schnittstelle aufweisen, mit der es an hierzu korrespondieren Schnittstellen der Kaffeemaschine und des Personal Computers anschliessbar ist. Insbesondere für den Anschluss am Personal Computer lässt sich dies besonders einfach über eine sogenannte Docking Station realisieren, wie sie beispielsweise von tragbaren Personal Computern und von sogenannten Organizern (Kleincomputern) in einem anderen Zusammenhang bekannt sind.

Weitere bevorzugte Ausgestaltungen der Erfindung ergeben sich aus den abhängigen Ansprüchen.

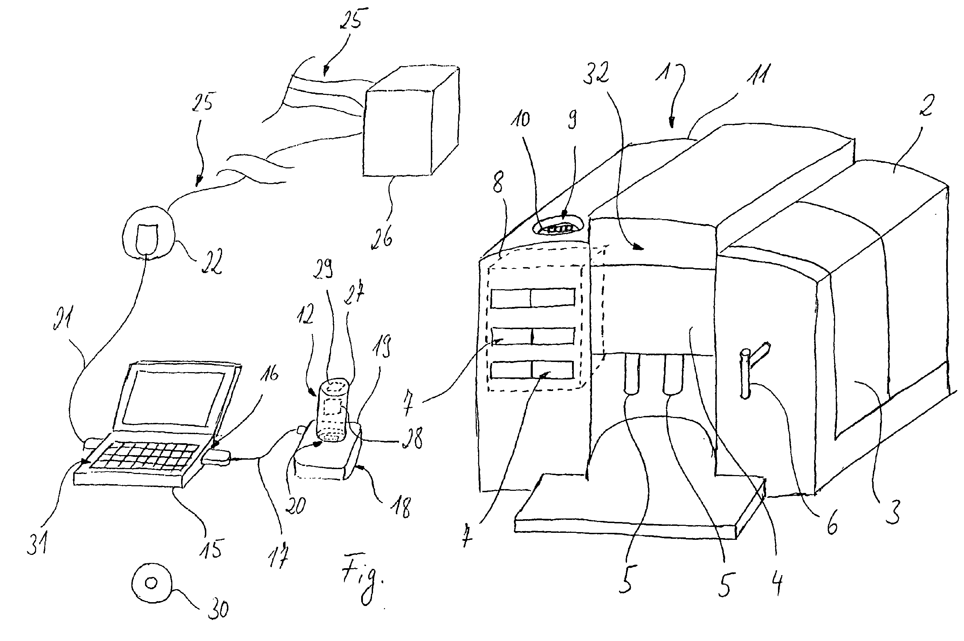

Die Erfindung wird anhand dem in der Figur schematisch dargestellten Ausführungsbeispiel näher erläutert.

Die Figur zeigt einen möglichen prinzipiellen Aufbau eines erfindungsgemässen Kaffeebrühsystems.

In der Figur ist ein bevorzugtes Ausführungsbeispiel der Erfindung gezeigt, das den erfindungsgemässen Datenaustausch mit einer Kaffeemaschine 1 ermöglicht. Die Kaffeemaschine 1 kann hierzu in Bezug auf sämtliche Bauteile, die die Erzeugung von Kaffee betreffen, prinzipiell wie an sich vorbekannte Kaffeemaschinen aufgebaut sein.

Die dargestellte Kaffeemaschine 1 weist somit einen Vorratsbehälter 2 für Kaffeebohnen auf, der zu einem nicht näher dargestellten Mahlwerk führt. Mit dem Mahlwerk werden die Bohnen in einem einstellbaren Mahlgrad zu Pulver zermahlen. Die Kaffeemaschine 1 weist ferner einen Wasserbehälter 3 und eine Brüheinrichtung 4 auf, deren beiden Ausflüsse 5 aus der Frontseite der Maschine herausstehen. Zur Kaffeeerzeugung wird in an sich vorbekannter Weise in der Brüheinrichtung 4 eine vorbestimmte Menge heisses und unter hohem Druck stehendes Wasser durch eine vorbestimmte Menge von Kaffeepulver gepresst.

Des weiteren ist eine Aufschäumdüse 6 vorhanden, mit der Milch aufgeschäumt und heisses Wasser bereitgestellt werden kann. Über mehrere, ebenfalls an der Frontseite angeordnete, Tasten 7 kann die Kaffeemaschine 1 bedient und verschiedene Funktionen angewählt werden. Die Tasten 7 gehören zu einer in der Figur lediglich schematisch angedeuteten elektronischen Steuereinrichtung 8 der Kaffeemaschine 1. Die Steuereinrichtung 8 dieser erfindungsgemässen Kaffeemaschine weist im wesentlichen noch einen Prozessor, einen flüchtigen sowie einen nicht-flüchtigen Speicher auf, in dem für die Funktionen der Kaffeemaschine grundlegende Steuerprogramme enthalten sein können.

Auf einer Oberseite der Maschine ist eine Schnittstelle 9 der Steuereinrichtung in Form von elektrischen Kontakten 10 angeordnet. Des weiteren weist die Schnittstelle 9 eine im Gehäuse 11 angeordnete Schnittstellenkarte auf, die zur Aufbereitung der über die Schnittstelle 9 laufenden Signale dient. Die Schnittstelle ist zur Aufnahme eines nachfolgend noch näher erläuterten mobilen Speichermoduls 12 der Kaffeemaschine vorgesehen.

In der Figur ist ferner ein Personal Computer 15 in Form eines handelsüblichen Notebooks gezeigt. An eine Schnittstelle 16, beispielsweise einer USB-Schnittstelle des Notebooks ist über ein Datenkabel 17 eine Docking-Station 18 angeschlossen. Die Docking-Station weist ein Gehäuse 19 mit einer Schnittstelle 20 auf. Die Schnittstelle 20 der Docking-Station 18 entspricht jener Schnittstelle 9 der Kaffeemaschine, einschliesslich der prinzipiell an sich vorbekannten Schnittstellenkarte. Die Docking-Station 18 hat zudem eine nicht näher dargestellte Stromversorgung.

Das Notebook 15 wiederum ist über ein Modem und ein Datenkabel 21 an eine Telefonsteckdose 22 eines Gebäudes angeschlossen, in dem sich auch die Kaffeemaschine 1 befindet.

Die Telefonsteckdose 22 führt zum weltweiten Telefon- und Datenleitungsnetz 25, das auch für die Datenkommunikation des Internets benutzt wird. In einem weit entfernten anderen Gebäude, das sich beispielsweise in einer anderen Stadt und einem anderen Land befindet, ist ebenfalls an das Telefonund Datenleitungsnetz 25 ein Server 26 angeschlossen. Auf dem Server werden diverse Informationen in Form von Programmen und Daten zum herunterladen bereitgestellt. Der Server 26 ist hierbei so konfiguriert und angeschlossen, dass er gleichzeitig mit mehreren Gegenstellen wie Computern kommunizieren kann. In der Fig. nicht dargestellt sind diverse mögliche zwischengeschaltete Stellen, die für eine Kommunikation über das Internet erforderlich sind.

Das Speichermodul 12 weist ein Gehäuse 27 auf, in dem sich ein durch Strichlinien angedeuteter flüchtiger Speicher 28 befindet, in den in binärer Form vorliegende Daten ein- und auslesbar sind. Über eine ebenfalls im Speicher angeordnete und ebenfalls durch Strichlinien angedeutete aufladbare Spannungsquelle 29 können die Daten im Speicher 28 gehalten werden. In dem Speichermodul 12 kann auch ein Prozessor vorgesehen sein, der Koordinationsaufgaben von vom Speichermodul auszuführenden Funktionen übernimmt.

Auf dem Computer 15 ist von einem Datenträger 30 aus ein Programm installiert worden, das für den erfindungsgemässen Datenaustausch zwischen dem Personal Computer 15 bzw. dem Server 26 und der Kaffeemaschine 1 dient. Das Programm weist hierzu eine auf dem Bildschirm des Notebooks dargestellte graphische Bedieneroberfläche auf, anhand welcher der Benutzer verschiedene vom Programm auszuführende Funktionen auswählen und/oder konfigurieren kann. Das Programm ist ferner mit einer (Software-)Schnittstelle versehen, über die der Datenfluss von und zum Server 26 läuft. Ebenso weist die Software eine weitere (Software-)Schnittelle auf, die für den Datenfluss von und zum Speichermodul 12 vorgesehen ist, das sich hierfür in der Docking-Station 18 befindet.

Nachdem mit dem Server eine Verbindung aufgebaut worden ist, kann zum einen der Benutzer vom Server 26 Informationen abfragen. Hierbei kann ein Datenfluss vom Server 26 zum Personal Computer 15 und dann zum Speichermodul 12 entstehen, der Informationen über Parameter enthält, die von der Steuereinrichtung 8 an der Kaffeemaschine 1 einzustellen sind und die das Kaffeearoma beeinflussen. Es kann sich hierbei um Kombinationen von bestimmten Werten der Menge, der Temperatur und des Druckes des Wassers sowie der Pulvermenge und des Mahlgrades des Kaffeepulvers handeln.

Zusätzlich können auch über eine Tastatur 31 des Computers 15 Daten eingegeben werden, die im Speichermodul abgelegt werden. Es kann sich hierbei beispielsweise um eine Zeichenfolge (Text) handeln, der über eine Anzeigeeinrichtung 32 (Display) der Kaffeemaschine angezeigt werden soll.

Sobald diese Daten in das Speichermodul 12 eingelesen sind, kann das Speichermodul 12 aus der Docking-Station 18 entnommen, zur Kaffeemaschine 1 gebracht und an deren Schnittstelle 9 angeschlossen werden. Ist dann das Speichermodul in die Kaffeemaschine eingesetzt, werden die Daten aus dem Speichermodul 12 ausgelesen und im Speicher der Steuereinrichtung 8 abgelegt. Das Speichermodul hat hierzu über das Programm auf dem Personal Computer einen entsprechenden Befehl erhalten und gespeichert. Hierdurch stehen der Steuereinrichtung 8 neue Parameterkombinationen zur Auswahl, die der Benutzer über die Tasten 7 auswählen und zur Kaffeeerzeugung benutzen kann.

In das Speichermittel des Speichermoduls können jedoch auch Daten über den Zustand der Kaffeemaschine 1 eingelesen werden. Diese Daten werden von der Steuereinrichtung während des Betriebes der Kaffeemaschine gesammelt und in ihrem Speicher abgelegt. Auch diese Daten werden in das Speichermodul kopiert, sobald dieses an die Schnittstelle der Kaffeemaschine angeschlossen ist. Durch ein nachfolgendes Einsetzen des Speichermoduls 12 in die Docking-Station 18 ist es dann möglich, mit dem Personal Computer 15 die Daten aus dem Speichermodul auszulesen und an den Server 26 des Herstellers der Kaffeemaschine in Form einer elektronischen Nachricht zu senden.

Es kann vorgesehen sein, dass der Benutzer zumindest einen Teil der Daten selbst mit seinem Personal Computer 15 sich anschauen kann. Hierunter können beispielsweise statistische Daten fallen, wieviele Kaffeeportionen von welchen einzelnen Kaffeetypen innerhalb welches Zeitraumes erzeugt worden sind, wann die Maschine 1 zuletzt entkalkt worden ist, etc.. Andere Daten, insbesondere solche, deren Bedeutung der Benutzer nicht beurteilen kann, sollten dem Benutzer auch nicht anzeigbar sein. Diese Daten sollten nur für den Hersteller zugänglich sein.

Beim Hersteller oder einer anderen zentralen Stelle für die Wartung der Maschinen werden dann die technischen Informationen ausgewertet und auf Abweichungen von Sollwerten und/oder Sollzuständen überprüft. Auf Basis der festgestellten Abweichungen kann darauf geschlossen werden, was für ein Defekt vorliegt und wie dieser zu beheben ist. Ebenso können dem Benutzer der Kaffeemaschine - wiederum über den elektronischen Nachrichtenweg - Informationen zur Behebung des Defektes übermittelt werden.

Sollte der Benutzer nicht in der Lage sein, den Defekt selbst zu beheben, so kann der Service des Maschinen-Herstellers eingeschaltet werden. Da der Grund des Defektes bekannt ist, können sofort Ersatzteile verschickt und ein Servicetechniker mit der Reparatur der Maschine beauftragt werden.

Über die Datenleitungen können aber selbstverständlich auch andere Daten zu jedem Benutzer einer Kaffeemaschine versandt werden. So ist es beispielsweise auch möglich, Updates der Maschinensteuerungssoftware zu übertragen und in die Kaffeemaschine zu laden. Es können auch beispielsweise Ergänzungen zur Bedienungsanleitung und Wartungs-Informationen übermittelt werden, die dann für den Benutzer mit dem auf dem Personal Computer 15 geladenen Programm zugänglich sind.

Schliesslich ist es auch möglich, dass die Einsteckeinrichtung (Docking station) ganz oder teilweise im Personal Computer oder Notebook-Computer integriert ist. Die Schnittstelle kann beispielsweise so ausgestaltet sein, dass ein USB flash memory oder ein ähnliches Speichermedium für den direkten Anschluss über eine USB-Schnittstelle eines PCs vorgesehen ist. Es können auch Adapterteile hierfür vorgesehen sein.

## Patentansprüche

1. Kaffeebrühsystem, umfassend eine zentrale Informationsstelle und mehrere, örtlich voneinander getrennte Kaffee-Brühvorrichtungen, wobei in jeder der Kaffee-Brühvorrichtungen in einem Brühverfahren Kaffeepulver mit heissem Wasser unter Druck aufbrühbar ist und wobei an jeder der Kaffee-Brühvorrichtungen an eine Schnittstelle ein transportables elektronisches Speichermittel anschliessbar ist, die zentrale Informationsstelle ausserhalb der Kaffee-Brühvorrichtungen angeordnet ist, die zentrale Informationsstelle weit entfernt liegen kann und zum Datenaustausch in Form von Signalen mit jeder der Kaffee-Brühvorrichtungen über Datenaustauschmittel vorgesehen ist, und die Datenaustauschmittel für den Datenaustausch Gebrauch von einem Personal Computer und vom Internet machen, wobei das transportable elektronische Speichermittel, das an die Schnittstellen der Kaffee-Brühvorrichtung anschliessbar ist, an einer Einsteckeinrichtung des Personal Computers einsteckbar ist, und wobei der Personal Computer mit der zentralen Informationsstelle über das Internet kommunizieren kann.

2. Kaffeebrühsystem nach Anspruch 1, **dadurch gekennzeichnet, dass** die Informationsstelle ein dem Hersteller der Kaffee-Brühvorrichtungen zugeordneter Server ist, der über technische Datenaustauschmittel mit der Kaffee-Brühvorrichtung verbindbar ist.

3. Kaffeebrühsystem nach Anspruch 2, **dadurch gekennzeichnet, dass** der Server abrufbare Daten enthält, mit denen das Aroma von einem mittels der Brühvorrichtung erzeugbaren Kaffees beeinflussbar ist.

4. Kaffeebrühsystem nach Anspruch 2 oder 3, **dadurch gekennzeichnet, dass** der Server zum gleichzeitigen Datenaustausch mit mehreren Kaffee-Brühvorrichtungen geeignet ist.

5. Kaffeebrühsystem nach einem der Ansprüche 1 - 4, **dadurch gekennzeichnet, dass** in dem transportablen Speichermittel in elektronischer Form Informationen über den Zustand von einer Kaffee-Brühvorrichtung ablegbar sind, die an die Informationsstelle sendbar sind.

## Claims

1. A coffee making system comprising a central information station and several separate coffee making units at different locations, whereby coffee powder and hot water is brewed under pressure in each of the coffee making units and whereby a portable electronic storage facility can be connected at an interface to each of the coffee making units, with the central information station being located outside the coffee making units, whereby this central information station, possibly located at some distance, is provided with data exchange facilities to exchange data in the form of signals with each of the coffee making units, such data exchange facilities making use of personal computers and the internet for the exchange of data, whereby the portable electronic storage facility, connectable to each of the coffee making units at the interface, can be plugged into a port of the personal computer and whereby the personal computer can communicate with the central information station via the internet.

2. The coffee making system according to claim 1 **characterised in that** the information station consists of a server associated with the manufacturer of the coffee making units, which server can be connected to the coffee making units via technical data exchange facilities.

3. The coffee making system according to claim 2 **characterised in that** the server contains accessible data by means of which the flavour of the coffee made by a coffee making unit can be influenced.

4. The coffee making system according to claims 2 or 3 **characterised in that** the server is designed for a simultaneous exchange of data with several coffee making units.

5. The coffee making system according to any one of the claims 1 - 4 **characterised in that** the portable storage facility allows for information regarding the state of a coffee making unit to be filed in it in electronic form and that such information can be transmitted to the central information station.

## Revendications

1. Système pour la préparation de café, comprenant un point d'information central et plusieurs dispositifs de préparation séparés, permettant de préparer du café dans chacun des dispositifs de préparation de café grâce à un procédé de préparation utilisant du café en poudre et de l'eau chaude sous pression, avec une mémoire électronique transportable pouvant être connectée à chacun des dispositifs de préparation de café par un point de jonction, le point d'information central étant disposé en dehors des dispositifs de préparation de café, à une distance même éloignée, avec des moyens de transmission de données pour l'échange de données sous forme de signaux avec chacun des dispositifs de préparation de café, les moyens de transmission de données pour l'échange de données passant par un ordinateur et une connexion Internet, tandis que la mémoire électronique transportable qui est reliée au dispositif de préparation de café par un point de jonction peut être branchée sur l'ordinateur, et l'ordinateur peut communiquer avec le point d'information central par Internet.

2. Système pour la préparation de café selon la revendication 1, **caractérisé en ce que** le point d'information central est un serveur attribué au fabricant de dispositifs de préparation de café, auquel peut être relié le dispositif de préparation de café par des moyens de transmission de données.

3. Système pour la préparation de café selon la revendication 2, **caractérisé en ce que** le serveur contient des données consultables capables d'influencer l'arôme du café qui est préparé au moyen du dispositif de préparation.

4. Système pour la préparation de café selon la revendication 2 ou 3, **caractérisé en ce que** le serveur est adapté pour l'échange de données avec plusieurs dispositifs de préparation de café simultanément.

5. Système de préparation de café selon l'une des revendications 1 à 4, **caractérisé en ce que** des informations concernant l'état d'un dispositif de préparation de café peuvent être stockées sous forme électronique dans la mémoire transportable et envoyées au point d'information.
